# EUROPÄISCHE PATENTANMELDUNG

(11) **EP 2 719 880 A2**
(43) Veröffentlichungstag der Anmeldung: **16.04.2014**
(21) Anmeldenummer: 13182776.8
(22) Anmeldetag: 03.09.2013
(51) Int. Cl.: F02C 6/12

(54) **Abgasturbolader**

(30) Priorität: 15.10.2012 DE 102012109807
(71) Anmelder: Benteler Automobiltechnik GmbH, 33102 Paderborn (DE)
(72) Erfinder: Elwan, Karim, 33102 Paderborn (DE); Lesch, Artur, 32839 Steinheim (DE)
(74) Vertreter: Griepenstroh, Jörg

(57) **Zusammenfassung**

Abgasturbolader (1), aufweisend ein Turbinengehäuse (3) sowie ein Verdichtergehäuse (2). Das Turbinengehäuse (3) ist derart aufgebaut, dass es als Schweißbauteil, aufweisend einen Lagerflansch (5) sowie einen Auslassflansch (7) und ein dazwischen sich erstreckenden Blechmantel (6) besitzt. Verbindungselemente (10) sind zwischen dem Lagerflansch (5) und dem Auslassflansch (7) angeordnet, die das Turbinengehäuse (3) stabilisieren sowie dessen Eigenfrequenz erhöhen. Hierdurch ist es möglich, einzelne Bauteile des Turbinengehäuses (3) in ihren Massen zu minimieren, bei gleichbleibender Steifigkeit und durch die gezielte Beeinflussung der Eigenfrequenz erhöhter Langlebigkeit.

## Beschreibung

Die vorliegende Erfindung betrifft einen Abgasturbolader zur Anordnung an einer Verbrennungskraftmaschine gemäß den Merkmalen im Oberbegriff von Patentanspruch 1.

Aus dem Stand der Technik ist es bekannt, zur Erhöhung der Effizienz einer Verbrennungskraftmaschine diese aufzuladen. Zur Aufladung selber sind wiederum verschiedene Ladertypen bekannt, beispielsweise Abgasturbolader, Kompressoren oder aber auch Druckwellenlader.

Bei einem Abgasturbolader wird die im während des Verbrennungsprozesses entstehenden Abgases enthaltene Restenergie dazu genutzt, die dem Ladungswechselvorgang zugeführte Frischluft vorzuverdichten. Hierdurch steigt der Füllungsgrad des Zylinders pro Ladungswechselvorgang, bei gleichbleibender Reibleistung der Verbrennungskraftmaschine, wodurch die effektiv bereitgestellte Motorleistung gesteigert wird.

Der Abgasturbolader selbst besitzt dafür ein Turbinenrad, durch dass das Abgas strömt und dabei von dem Enthalpiegefälle des Abgases angetrieben wird. Das Turbinenrad treibt dabei über eine direkte oder aber indirekte Kopplung ein Verdichterrad an. Das Verdichterrad ist wiederum in einem Verdichtergehäuse untergebracht, wobei durch das Verdichtergehäuse die angesaugte Frischluft strömt und durch das Verdichterrad verdichtet wird.

Dabei weisen die zuvor beschriebenen Räder sowie die Kupplung Drehzahlen von bis zu 200.000 Umdrehungen pro Minute auf.

Der gesamte Abgasturbolader ist während des Betriebs darüber hinaus starken thermischen Schwankungen ausgesetzt. So strömt durch das Turbinengehäuse, im Falle eines Ottomotors, Abgas mit einer Temperatur von mehr als 1.000° C. Die angesaugte Luft, die durch das Verdichtergehäuse strömt weist hierzu Umgebungstemperatur auf, mithin Temperaturen im Wesentlichen von -10° bis 40° C.

Die einzelnen Bauteile sind somit im Betrieb thermischen Schwankungen und hierdurch bedingt verschiedenen thermischen Ausdehnungen ausgesetzt, wobei die Bemaßungen der Turbinengeometrie aber auch der Verdichtergeometrie zur Verminderung von Spaltverlusten nahezu spaltfrei ausgebildet sein muss, zur Vermeidung von mechanischen Kontakten von statischen zu rotierenden Teilen jedoch eines hinreichenden Sicherheitsabstands bedürfen.

Aufgrund der voneinander verschiedenen thermischen Ausdehnungen und der hohen Drehzahlen sowie der zumeist direkten Anbindung an oder in der Nähe einer Verbrennungskraftmaschine ist der Abgasturbolader während seines Betriebs starken Vibrationen und Erschütterungen ausgesetzt. Insbesondere die Vibrationen erfolgen zum einen aufgrund externer Erregung, zum anderen jedoch aufgrund einer von dem Abgasturbolader erfolgten Eigenerregung.

Zur Stabilisierung der Abgasturboladergehäuse ist beispielsweise aus der DE 44 32 073 A1 eine Vorrichtung zum Befestigen eines Abgasturboladers bekannt, mit der es möglich ist, die Betriebssicherheit eines Abgasturboladers zu erhöhen.

Ferner ist aus der DE 36 41 478 A1 ein Gehäuseträger für einen Abgasturbolader bekannt.

Ausgehend von diesem Stand der Technik ist es Aufgabe der vorliegenden Erfindung, einen Abgasturbolader bereitzustellen, bei dem die Kopplung der einzelnen Bauteile untereinander, insbesondere unter Dauerfestigkeitsaspekten verbessert ist sowie die Möglichkeit bietet, optional den Abgasturbolader an einer Verbrennungskraftmaschine anzuordnen oder zu befestigen bzw. Bauteile an dem Abgasturbolader zu befestigen.

Die zuvor genannte Aufgabe wird erfindungsgemäß mit einem Abgasturbolader gemäß den Merkmalen im Patentanspruch 1 gelöst.

Vorteilhafte Ausführungsvarianten der vorliegenden Erfindung sind Gegenstand der abhängigen Patentansprüche.

Die vorliegende Erfindung betrifft einen Abgasturbolader zur Anordnung an einer Verbrennungskraftmaschine, insbesondere in einem Kraftfahrzeug, wobei der Abgasturbolader ein Turbinengehäuse und ein Verdichtergehäuse aufweist und das Turbinengehäuse als Blechbauteil ausgebildet ist. Der Abgasturbolader ist erfindungsgemäß dadurch gekennzeichnet, dass an dem Turbinengehäuse ein Auslassflansch zur Kopplung eines Abgasstrangs und ein Lagerflansch zur mittelbaren oder unmittelbaren Kopplung mit dem Verdichtergehäuse ausgebildet ist, wobei zwischen dem Lagerflansch und dem Auslassflansch ein Blechmantel angeordnet ist und der Lagerflansch und der Auslassflansch über Verbindungselemente miteinander gekoppelt sind, wobei die Verbindungselemente außerhalb des Turbinengehäuses angeordnet sind und die Verbindungselemente die Schwingungen des Abgasturboladers dämpfen.

Im Rahmen der Erfindung ist insbesondere das Turbinengehäuse als gebautes Gehäuse, ganz besonders bevorzugt als Schweißkonstruktion bzw. Schweißbauteil ausgebildet.

Der Auslassflansch und/oder der Lagerflansch können im Rahmen der Erfindung als Fräsbauteil oder aber auch als Gussbauteil selbst ausgebildet sein. Im Rahmen der Erfindung können der Auslassflansch und/oder der Lagerflansch auch als Schmiedebauteil ausgebildet sein. In der Regel wird dann ein Gussbauteil oder ein Schmiedebauteil spanend nachbearbeitet, insbesondere gefräst, um die gewünschten Konturen und die Flächen zu erhalten. An den Flansch selbst wird dann wiederum mindestens eine Außenmantelfläche des Turbinengehäuses in Form eines Blechmantels angeschweißt. Insbesondere erfolgt die Schweißung gasdicht. Im Rahmen der Erfindung ist es jedoch auch möglich, beispielsweise den Blechmantel mit den Flanschen zu verlöten.

Durch die zusätzlichen Verbindungselemente zwischen Auslassflansch und Lagerflansch selber ist es möglich, die Bauteile in ihren jeweiligen Wandstärken zu minimieren, so dass eine Gasdichtigkeit gegeben ist, wobei die eigentliche Stabilisierung sowie ein Ausgleich des zu erwartenden Schwingverhaltens über die Verbindungselemente realisiert wird. Hierzu sind die Verbindungselemente außerhalb des Turbinengehäuses angeordnet.

Im Rahmen der Erfindung ist es ferner möglich, das Turbinengehäuse und insbesondere den Abgasturbolader selber an den Verbindungselementen aufzuhängen oder aber mit anderen Bauteilen zu koppeln. Die Verbindungselemente selber können dabei beispielsweise als massive Bolzen ausgebildet sein, die mit den Flanschen verschraubt sind. Im Rahmen der Erfindung ist es ebenfalls möglich, dass die Bolzen auch mit den Flanschen verschweißt oder aber verlötet werden. Im Rahmen der Erfindung ist es jedoch auch möglich, die Verbindungselemente als Hohlbauteile, beispielsweise als Hülsen, auszubilden. Eine Alternative besteht darin, die Verbindungselemente als Schalenbauteile, beispielsweise als Halbschalen, wobei diese im Wesentlichen L-förmig oder C-förmig im Querschnitt konfiguriert sind, auszubilden. Davon abhängig ist die Wahl der Verbindungselemente in Anzahl sowie Ausführungsvariante von dem zu erwartenden Schwingverhalten des Abgasturboladers. Dieses wird zum einen durch die Drehzahl der Turbine in dem Turbinengehäuse selber, zum anderen durch die Schwingungen der Verbrennungskraftmaschine beeinflusst. Im Rahmen der Erfindung ist es möglich, zum einen durch die mechanische Abstützung bzw. Stabilisierung der Verbindungselemente, zum anderen durch die Massen der Verbindungselemente das Schwingverhalten, insbesondere die Eigenfrequenz des Abgasturboladers und insbesondere des Turbinengehäuses derart zu beeinflussen, dass eine höhere Standfestigkeit bei gleichzeitiger Minimierung der verwendeten Massen erreicht wird. Bevorzugt werden die im Bereich des Abgasturboladers entstehenden Schwingungen gedämpft. Somit ist es möglich bei reduziertem Materialeinsatz der zu verbauenden Komponente eine gleichbleibende oder aber erhöhte Lebenserwartung zu realisieren.

Hierzu sind insbesondere der Lagerflansch und der Auslassflansch parallel zueinander beabstandet angeordnet. Der Blechmantel selbst ist unter Minimierung der Wandstärke sowohl mit dem Lagerflansch als auch mit dem Auslassflansch thermisch gefügt. Im Rahmen der Erfindung wäre es jedoch auch vorstellbar, dass hier insbesondere am Auslassflansch ein Schiebesitz verwendet wird, wobei dann der Blechmantel im Bereich des Auslassflansches gasdicht mit dem folgenden Abgasstrang gekoppelt wird.

Im Rahmen der Erfindung wird eine Wandstärke für den Blechmantel eingesetzt, die eine Dicke von 1 mm bis 2 mm aufweist. Insbesondere werden auf den abgasseitigen Blechen, mithin den Blechen, die mit Abgas in Kontakt kommen, austenitische Werkstoffe eingesetzt, wohingegen bei den Außenschalen, mithin dem Blechmantel, der nicht dem direkten Abgas ausgesetzt ist, ein ferritischer Werkstoff eingesetzt wird. Im Rahmen der Erfindung ist es weiterhin möglich, die Blechbauteile, mithin insbesondere den Blechmantel, als tiefgezogenes Umformbauteil herzustellen. Darüber hinaus ist es jedoch auch möglich, den Blechmantel selbst als Hydroformbauteil herzustellen.

Insbesondere ist im Falle eines Schiebesitzes der Blechmantel in dem Auslassflansch zumindest abschnittsweise diesen durchgreifend angeordnet. Der Blechmantel ist derart geformt, dass er einen außenseitigen Stutzenfortsatz besitzt, der dann in dem Auslassflansch als Schiebesitz oder aber auch als stoffschlüssiger Verbund angeordnet ist. Im Rahmen der Erfindung ist es somit möglich, den Blechmantel als Schweißkonstruktion herzustellen. Beispielsweise wird der Blechmantel geformt und dann aus einem Blechstreifen geformt und gasdicht längsnahtverschweißt. Im Rahmen der Erfindung ist es jedoch auch möglich, den Blechmantel als Tiefziehbauteil herzustellen und anschließend mit den Flanschen zu fügen. Die Stabilität des Bauteils selber wird dann wiederum über die erfindungsgemäßen Verbindungselemente hergestellt.

Im Rahmen der Erfindung ist es möglich, die Verbindungselemente selber als Bolzen, Hülsen oder aber auch Schalenbauteil auszubilden, wobei diese dann wiederum mit den jeweiligen Flanschen gekoppelt werden. Im Rahmen der Erfindung ist es weiterhin möglich, die Verbindungselemente mit den Flanschen formschlüssig zu koppeln.

Ein weiterer erfindungswesentlicher Vorteil ist, dass die Eigenfrequenz, insbesondere die erste Eigenfrequenz des Turbinengehäuses und bevorzugt die Eigenfrequenz des gesamten Turboladers auf über 180 Hz, insbesondere auf mehr als 200 Hz und bevorzugt auf mehr als 214 Hz angehoben wird. Es bedarf somit einer sehr hochfrequenten Erregung des Turbinengehäuses bzw. des gesamten Abgasturboladers, bevor dieser durch Erreichen der Eigenfrequenz in ein schädliches Schwingverhalten überführt wird.

Im Rahmen der Erfindung ist es weiterhin möglich, dass nicht nur die Eigenfrequenz des Turboladers angehoben wird, sondern gleichsam auch die Eigenfrequenz des mit dem Turbolader gekoppelten Abgaskrümmers. Ebenfalls ist es möglich, ein kombiniertes Abgasturboladerkrümmermodul mit dem erfindungsgemäßen Aufbau auszustatten, wobei dann die Eigenfrequenz ebenfalls angehoben wird.

In einer weiteren bevorzugten Ausführungsvariante ist der Blechmantel doppelwandig ausgebildet. Im Rahmen der Erfindung kann das Abgasturboladergehäuse in diesem Bereich zusätzliches Isolationsmaterial oder aber zusätzlichen Isolationswerkstoff aufweisen.

Ebenfalls ist es möglich, dass an den Verbindungselementen und/oder dem Auslassflansch und/oder dem Lagerflansch weitere Bauteile gekoppelt sind. Hierbei kann es sich beispielsweise um Abgasbauteile oder aber auch Abgasrückführungsbauteile handeln. Diese sind insbesondere ein Abgasrückführungswärmetauscher oder aber auch ein Katalysator. Im Rahmen der Erfindung kann ebenfalls der gesamte Abgasturbolader über die Verbindungselemente selbst an dem Motor oder aber an einer Abgasturboladeraufhängung gekoppelt sein.

Weitere Vorteile, Merkmale, Eigenschaften und Aspekte der vorliegenden Erfindung sind Bestandteil der nachfolgenden Beschreibung. Bevorzugte Ausführungsvarianten sind in den schematischen Figuren dargestellt. Diese dienen dem einfachen Verständnis der Erfindung. Es zeigen:
Figur 1 einen erfindungsgemäßen Abgasturbolader mit Verbindungselementen in Form von Bolzen und
Figur 2 den Abgasturbolader mit Verbindungselementen in Form von Schalenbauteilen.

In den Figuren werden für gleiche oder ähnliche Bauteile dieselben Bezugszeichen verwendet, auch wenn eine wiederholte Beschreibung aus Vereinfachungsgründen entfällt.

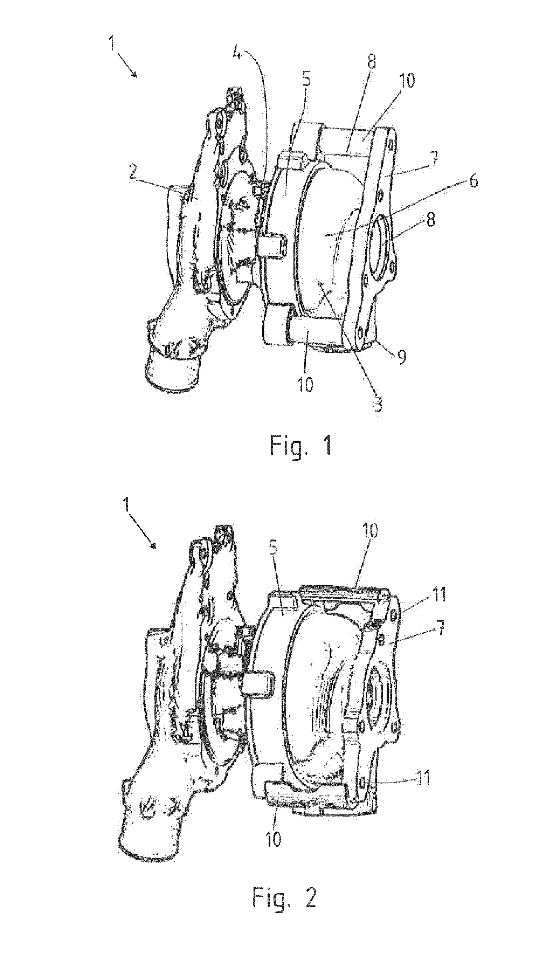

Figur 1 zeigt einen erfindungsgemäßen Abgasturbolader 1, aufweisend ein Verdichtergehäuse 2 sowie ein Turbinengehäuse 3. Das Verdichtergehäuse 2 und das Turbinengehäuse 3 sind mittelbar übereinander durch Eingliederung eines Zwischengehäuses 4 verbunden. In dem Verdichtergehäuse 2 rotiert ein nicht näher dargestelltes Verdichterrad und in dem Turbinengehäuse 3 ein nicht näher dargestelltes Turbinenrad. Die beiden Räder sind über eine Welle, die durch das Zwischengehäuse 4 verläuft, miteinander verbunden. Das Verdichtergehäuse 2 und das Zwischengehäuse 4 können, wie hier dargestellt, als Gussbauteil ausgebildet sein. Im Rahmen der Erfindung ist jedoch insbesondere das Turbinengehäuse 3 als Schweißkonstruktion ausgebildet, wobei das Turbinengehäuse 3 einen Lagerflansch 5, einen Blechmantel 6 sowie einen Auslassflansch 7 besitzt. Der Blechmantel 6 erstreckt sich dabei als Blechbauteil zwischen dem Lagerflansch 5 sowie dem Auslassflansch 7. Der Blechmantel 6 selbst ist bevorzugt über jeweils eine Schweißnaht 8 radial umlaufend mit dem Lagerflansch 5 und dem Auslassflansch 7 gasdicht gekoppelt. An seiner Unterseite besitzt der Blechmantel 6 einen Auslassstutzen 9 zur Anbindung einer Abgasleitung, beispielsweise von einem Krümmer. Erfindungsgemäß sind der Lagerflansch 5 und der Auslassflansch 7 über Verbindungselemente 10 miteinander gekoppelt. Die Verbindungselemente 10 sind hier dargestellt in Form von Verbindungsbolzen, die beispielsweise schraubtechnisch mit dem Lagerflansch 5 und mit dem Auslassflansch 7 gekoppelt sind. Die Verbindungselemente 10 sind außerhalb des Turbinengehäuses 3 angeordnet.

Figur 2 zeigt einen im Wesentlichen analogen Aufbau zu der Darstellung von Figur 1, wobei in Abwandlung die Verbindungselemente 10 in Form von Schalenbauteilen ausgebildet sind, die außenseitig mit den Flanschen 5, 7 gekoppelt sind. Im Rahmen der Erfindung ist es somit möglich, beispielsweise durch Montageöffnungen 11 an dem Auslassflansch 7 weitere Bauteile zusätzlich mit diesem zu koppeln oder aber den Abgasturbolader 1 über diese Montageöffnungen 11 an der Verbrennungskraftmaschine oder an einer anderweitigen Aufhängung im Motorraum festzulegen.

### Bezugszeichen:

- 1: - Abgasturbolader
- 2: - Verdichtergehäuse
- 3: - Turbinengehäuse
- 4: - Zwischengehäuse
- 5: - Lagerflansch
- 6: - Blechmantel
- 7: - Auslassflansch
- 8: - Schweißnaht
- 9: - Anlassstutzen
- 10: - Verbindungselement
- 11: - Montageöffnung

## Patentansprüche

1. Abgasturbolader (1) zur Anordnung an einer Verbrennungskraftmaschine, insbesondere in einem Kraftfahrzeug, wobei der Abgasturbolader (1) ein Turbinengehäuse (3) und ein Verdichtergehäuse (2) aufweist und das Turbinengehäuse (3) als Blechbauteil ausgebildet ist, **dadurch gekennzeichnet, dass** an dem Turbinengehäuse (3) ein Auslassflansch (7) zur Koppelung eines Abgasstranges und ein Lagerflansch (5) zur mittelbaren oder unmittelbaren Koppelung mit dem Verdichtergehäuse (2) ausgebildet ist, wobei zwischen dem Lagerflansch (5) und dem Auslassflansch (7) ein Blechmantel (6) angeordnet ist und der Lagerflansch (5) und der Auslassflansch (7) über Verbindungselemente (10) miteinander gekoppelt sind, wobei die Verbindungselemente (10) außerhalb des Turbinengehäuses (3) angeordnet sind und die Verbindungselemente (10) die Schwingungen des Abgasturboladers (1) dämpfen.

2. Abgasturbolader nach Anspruch 1, **dadurch gekennzeichnet, dass** der Auslassflansch (7) und der Lagerflansch (5) über mindestens einen Bolzen in einem Abstand zueinander gekoppelt sind, insbesondere über drei parallel zueinander verlaufende Bolzen.

3. Abgasturbolader nach Anspruch 1 oder 2, **dadurch gekennzeichnet, dass** der Lagerflansch (5) und der Auslassflansch (7) parallel zueinander beabstandet angeordnet sind.

4. Abgasturbolader nach einem der Ansprüche 1 bis 3, **dadurch gekennzeichnet, dass** der Blechmantel (6) mit dem Lagerflansch (5) verschweißt ist.

5. Abgasturbolader nach einem der Ansprüche 1 bis 4, **dadurch gekennzeichnet, dass** der Blechmantel (6) den Auslassflansch (7) zumindest abschnittsweise durchgreift.

6. Abgasturbolader nach einem der Ansprüche 1 bis 5, **dadurch gekennzeichnet, dass** der Blechmantel (6) mit dem Auslassflansch (7) stoffschlüssig gekoppelt ist.

7. Abgasturbolader nach einem der Ansprüche 1 bis 6 **dadurch gekennzeichnet, dass** das Verbindungselement (10) als Schalenbauteil ausgebildet ist, wobei das Verbindungselement (10) mit dem Lagerflansch (5) und dem Auslassflansch (7) gekoppelt ist.

8. Abgasturbolader nach einem der Ansprüche 1 bis 7, **dadurch gekennzeichnet, dass** die erste Eigenfrequenz des Turbinengehäuses, insbesondere des Abgasturboladers auf über 180Hz, insbesondere auf mehr als 200Hz, bevorzugt auf mehr als 214Hz angehoben wird.

9. Abgasturbolader nach einem der Ansprüche 1 bis 8, **dadurch gekennzeichnet, dass** der Blechmantel (6) doppelwandig ausgebildet ist.

10. Abgasturbolader nach einem der Ansprüche 1 bis 9, **dadurch gekennzeichnet, dass** an den Verbindungelementen (10) und/oder dem Lagerflansch (5) weitere Bauteile gekoppelt sind.
